# EUROPEAN PATENT APPLICATION

(11) **EP 3 023 577 A1**
(43) Date of publication of application: **25.05.2016**
(21) Application number: 14193994.2
(22) Date of filing: 20.11.2014
(51) Int. Cl.: E21B 44/00, G06F 9/00

(54) **A control system for a drilling apparatus**

(71) Applicant: Sandvik Mining and Construction Oy, 33330 Tampere (FI)
(72) Inventor: Huikkola, Miika, 33330 Tampere (FI); Pirinen, Tuomo, 33330 Tampere (FI); Puura, Jussi, 33330 Tampere (FI); Uitto, Vesa, 33330 Tampere (FI)

(57) **Abstract**

A control system for a drilling apparatus, the control system comprising: a control unit for controlling machine control level operations of the drilling apparatus; one or more machine control nodes connected to the control unit via a control bus, said machine control nodes providing at least one output from one or more sensors of the drilling apparatus; and an analysis functionality arranged to operate at said machine control level, said analysis functionality being arranged to obtain measurement data of said one or more sensors from said one or more machine control nodes via the control bus and to carry out an analysis of a drilling process.

## Description

### Field of the invention

The present invention relates to drilling apparatuses, and more particularly to a control system for a drilling apparatus.

### Background of the invention

When holes are drilled into rock, the drilling conditions may vary in several ways. The rock may include voids and cracks with different orientations, and rock layers having different strength, ore grade, hardness and abrasivity, and the changes in the drilling conditions may provide interesting information for the drilling process and consequent stages of the overall excavation process.

Various measurement-while-drilling (MWD) tools have traditionally been used in rotary drilling, such as in oil and gas drilling and surface blasthole drilling, for obtaining measurement data regarding the drilling conditions. An MWD analysis based on the various measurements is carried out in a separate MWD unit. The MWD unit may be a remote computer, e.g. a PC, located in the mining area or even further away, and the measurement information obtained from the drilling apparatus and/or any separate measurement system is transmitted to the MWD unit for the analysis. The MWD unit may also be implemented as an auxiliary unit of a drilling apparatus, wherein an auxiliary interface is required for transferring the measurement information obtained from the sensors of the drilling apparatus to the MWD unit.

Transmitting the measurement information obtained from the sensors to a separate MWD unit always introduces delays in processing the data. Moreover, the data speed and the sampling rate used on the control bus delivering the sensor data is typically much higher than the data speed on any communication interface used for transmitting the measurement information to the auxiliary/separate MWD unit, thus inevitably causing distortion in the sensor signal data. Furthermore, if it is desired to receive the analysis results in the drilling apparatus for further use, a feedback connection from the MWD unit is needed, causing further delays and compatibility problems. Consequently, it is practically impossible to carry out an MWD analysis in real-time with drilling process and to obtain accurate results due to at least somewhat distorted input data. In addition, a separate analysis cannot utilize all data available from a drilling apparatus, and is therefore subject to interpretation by the person conducting the analysis or the method and software used in the analysis.

### Summary of the invention

An improved control system has now been developed for controlling a drilling process on a work machine. Various aspects of the invention include a control system and a drilling apparatus, which are characterized by what is stated in the independent claims. Various embodiments of the invention are disclosed in the dependent claims.

According to a first aspect, there is provided a control system for a drilling apparatus, the control system comprising: a control unit for controlling machine control level operations of the drilling apparatus; one or more machine control nodes connected to the control unit via a control bus, said machine control nodes providing at least one output from one or more sensors of the drilling apparatus; and an analysis functionality arranged to operate at said machine control level, said analysis functionality being arranged to obtain measurement data of said one or more sensors from said one or more machine control nodes via the control bus and to carry out an analysis of a drilling process.

According to an embodiment, the analysis functionality is a hardware module operating as a machine control node connected to the control unit via the control bus.

According to an embodiment, the analysis functionality is a software module integrated into a machine control node or the control unit.

According to an embodiment, the analysis functionality is arranged to be controlled by commands or information contained in messages of a protocol used in said control bus.

According to an embodiment, the analysis functionality is arranged to be switched on in response to switching on the control system.

According to an embodiment, the control system comprises an interface to a user interface of the drilling apparatus; and the user interface comprises means for monitoring and/or controlling the operation of the analysis functionality.

According to an embodiment, the analysis functionality is arranged to carry out the analysis without storing the measurement data of said one or more sensors in a memory.

According to an embodiment, software of the analysis functionality is arranged to be updated in connection with or as a part of updating the control system.

According to an embodiment, the analysis functionality is arranged to carry out a measurement-while-drilling (MWD) analysis of the drilling process, where control data of the drilling process is used as an input for the MWD analysis.

According to an embodiment, the control system is arranged to monitor operation of at least one machine control node used to control the drilling process; and data obtained from monitoring the operation of the at least one machine control node is used to supplement the MWD analysis.

According to an embodiment, changes in rock material being drilled are arranged to be analysed during a constant state of a first drilling parameter on the basis of changes caused to at least a second drilling parameter.

According to an embodiment, the control system is arranged to adjust at least the first drilling parameter to be kept constant on the basis of changes in at least the second parameter.

According to an embodiment, the analysis functionality is arranged to identify the constant state of at least the first parameter and perform the analysis on the basis of changes in at least the second parameter.

According to an embodiment, diagnostics provided by the MWD analysis is arranged to be displayed on the user interface of the drilling apparatus.

According to an embodiment, diagnostics provided by the MWD analysis is arranged to be provided to a remote computer.

According to a second aspect, there is provided a drilling apparatus arranged to carry out a drilling process, the drilling apparatus comprising a control system as described above.

According to a third aspect, there is provided an auxiliary equipment for a drilling apparatus arranged to carry out a drilling process, the auxiliary equipment comprising a control system as described above.

According to a fourth aspect, there is provided a method of controlling machine control level operations of a drilling apparatus, the method comprising obtaining measurement data of one or more sensors of the drilling apparatus from one or more machine control nodes via a control bus, carrying out an analysis of a drilling process at said machine control level based on said measurement data, and controlling said machine control level operations based on the result data of said analysis.

According to an embodiment, the analysis is carried out in a hardware module operating as a machine control node. According to another embodiment, the analysis is carried out in a software module integrated into a machine control node.

According to an embodiment, the analysis is controlled by commands or information contained in messages of a protocol used in said control bus.

According to an embodiment, the analysis is monitored and/or controlled via a user interface.

According to an embodiment, the analysis is carried out without storing the measurement data of said one or more sensors in a memory.

According to an embodiment, the analysis comprises a measurement-while-drilling (MWD) analysis of the drilling process, where control data of the drilling process is used as an input for the MWD analysis.

According to an embodiment, the method further comprises monitoring operation of at least one machine control node used to control the drilling process, and using the data obtained from monitoring the operation of the at least one machine control node to supplement the MWD analysis.

According to an embodiment, the method further comprises analysing changes in rock material being drilled during a constant state of a first drilling parameter on the basis of changes caused to at least a second drilling parameter.

According to an embodiment, the method further comprises adjusting at least the first drilling parameter to be kept constant on the basis of changes in at least the second parameter.

According to an embodiment, the method further comprises identifying the constant state of at least the first parameter and performing the analysis on the basis of changes in at least the second parameter.

According to an embodiment, the method further comprises displaying diagnostics provided by the MWD analysis on the user interface of the drilling apparatus.

According to an embodiment, the method further comprising providing diagnostics provided by the MWD analysis to a remote computer. According to a fifth aspect, there is provided a computer program product, stored on a non-transitory memory medium, comprising computer program code which, when executed by a processor, causes an apparatus to perform any of the steps of method claims 18-30

These and other aspects of the invention and the embodiments related thereto will become apparent in view of the detailed disclosure of the embodiments further below.

### List of drawings

In the following, various embodiments of the invention will be described in more detail with reference to the appended drawings, in which
- Fig. 1: shows a schematic representation of a rock drilling apparatus as an example of a work machine suitable for implementing the embodiments of the invention;
- Fig. 2: shows a schematic representation of drilling unit;
- Figs. 3a, 3b and 3c: show examples of a control system according to some embodiments of the invention;
- Fig. 4: shows general application areas of various drilling processes;
- Figs. 5a, 5b: show examples of drilling control information usable in an MWD analysis according to an embodiment of the invention; and
- Fig. 6: shows a block diagram of a control system of a drilling apparatus.

### Description of embodiments

The presently disclosed embodiments are applicable, in particular, to various working machines capable of performing drilling operations. Particular examples of such working machines are mining and construction apparatuses required in mining industry, such as various mobile rock drilling machines. A mining apparatus may be a mobile mining apparatus, which may be referred to as a mining vehicle, or a stationary mining apparatus. It should also be noted that, in general, a mining apparatus may also refer to various machines used for rock excavation in a surface or underground operating area. In this context, the term "rock" is to be understood broadly to cover also a boulder, rock material, crust and other relatively hard material.

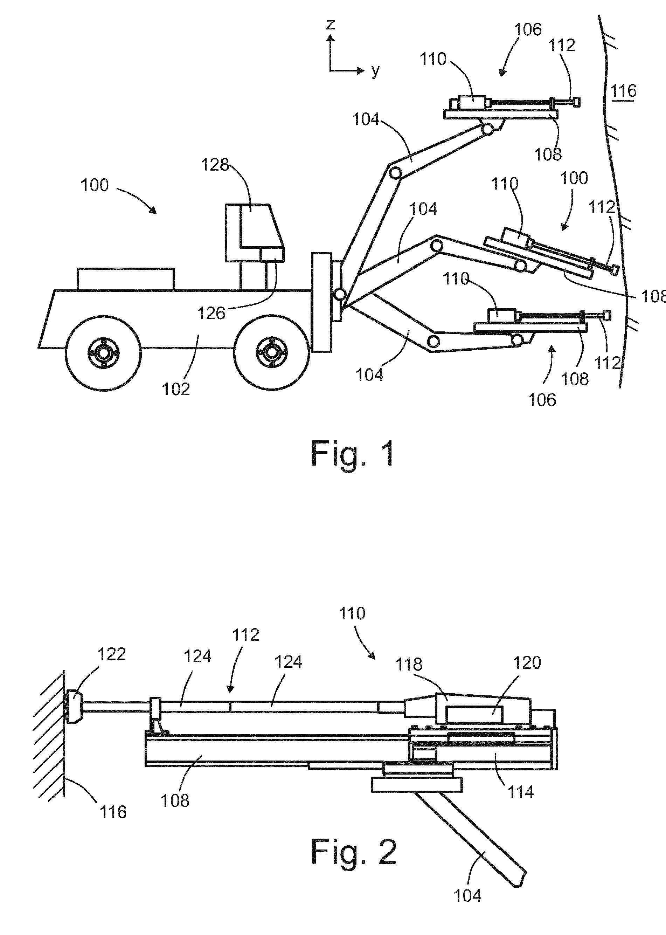

Fig. 1 shows a rock drilling apparatus 100, such as a rock drilling rig comprising a movable carrier 102, one or more drilling booms 104 and drilling units 106 arranged in the drilling booms 104. The drilling unit 106 comprises a feed beam 108 on which a rock drill 110 can be moved by means of a feed actuator (e.g. a feed motor or a feed cylinder; not shown in Fig. 1). Further, the drilling unit 106 comprises a tool 112 with which the impact pulses given by a percussion device (not shown in Fig. 1) of the rock drill 110 are transmitted to the rock to be drilled. The rock drilling apparatus typically comprises a plurality of pumps (not shown in Fig. 1) for generating hydraulic pressure for operating various parts of the apparatus, for pumping drilling fluid for lubricating, cooling, and cleaning a drilling bit, and for pumping rock cuttings from the drill holes.

The drilling unit 106 is shown further in detail in Fig. 2. The drilling unit comprises the rock drill 110 arranged on the feed beam 108. The rock drill 110 can be moved in the longitudinal direction of the feed beam 108 by means of the feed actuator 114. The feed actuator 114 may be, for example, a hydraulically operated cylinder or motor arranged to affect the rock drill 110 through a power transmission element, such as a chain or a wire. The rock drill 110 and the tool 112 connected thereto are pressed against rock 116 by using a feed force of a desired magnitude. The feed beam 108 may be movably arranged at a free end of the drilling boom 104 belonging to the rock drilling apparatus 100.

The rock drill 110 comprises at least a percussion device 118 and a rotating motor 120. The percussion device 118 is used for generating stress waves like impact pulses to the tool 112 connected to the rock drill 110, the tool delivering the stress waves to the rock 116. An outermost end of the tool 112 is provided with a drill bit 122, the buttons therein penetrating the rock 116 due to the stress waves, causing the rock 116 to break. Furthermore, the tool 112 is rotated with respect to its longitudinal axis, which enables the buttons in the drill bit 122 repeatedly be struck at a new point in the rock 116. The tool 112 is rotated by means of the rotating motor 120, which may be e.g. a hydraulically operated device or an electric device. The tool 112 may comprise several drill rods 124 arranged on each other consecutively. Screw joints may be provided between the drill rods 124. The percussion device 7 may comprise a percussion piston, which is moved back and forth by means of a pressure medium (e.g. hydraulic or pneumatic) and which is arranged to strike upon a tool or a shank adapter arranged between a tool and a percussion piston.

Referring back to Fig. 1, the rock drilling rig 100 further comprises at least one control unit 126 arranged to control actuators of the rock drilling rig 100. The control unit 126 may be a computer or a corresponding device, and it may comprise a user interface with a display device as well as control means for giving commands and information to the control unit 126. The control unit 126 and its user interface are typically located within a cabin 128 of the rock drilling apparatus 100. However, in some embodiments, the drilling apparatus may be remotely controlled and monitored. Hence, at least some of the presently disclosed features may be arranged in connection with a user interface remote from the rock drilling rig generating the measurement data. The user interface of the drilling apparatus may comprise a wheel, a joystick, a display unit, switches and/or some other means for moving the mining apparatus, for controlling drilling operations, for positioning the tool, for switching the tool on and off, etc.

Instead of the underground drilling apparatus depicted in Fig. 1, the drilling apparatus may as well be a surface drilling apparatus used for blast hole drilling in construction, quarrying, and/or open-pit mining. The drilling method may be based on, for example, Down-The-Hole (DTH) method or top-hammer method.

A DTH drilling apparatus comprises a rock drill that screws directly on the bottom of a drill string. The DTH rock drill is typically pneumatically driven but also other means of energy transfer are possible. In a top-hammer drilling apparatus, a top-hammer is mounted on a mast of the drill, applying a percussive force on the drill rod, which is transmitted to the drill bit. A top-hammer rock drill is typically hydraulically driven but also other means of energy transfer are possible.

It is noted that the above descriptions about various drilling apparatuses are only examples used for illustrative purposes and both the drilling apparatuses and the drilling methods may vary a lot. The embodiments described below may be applied in various types of drilling apparatuses known as such by a skilled person.

The drilling apparatus may be provided with various sensors to detect states of actuators and/or to measure conditions of different parts of the apparatus and possibly to take measurements about the environment. The actuators and sensors may be under the control of a control system, which may comprise a supervisor element providing visual and/or audible information to the user by a user interface (UI), to control the operation of the actuators, to analyze sensor signals, parameters etc. possibly needed in determining the status of the drilling apparatus. The user interface provides information to the user, for example via the display unit, and receives user's commands. The control panel may be a part of the user interface and controlled by the supervisor element.

Signals between different parts of the control system may be transferred by a communication network, such as a field bus, a CAN bus (Controller Area Network), Profibus or Ethernet. The communication may use one or more higher level protocol such as CANopen, J1939 and/or Profinet. Actuators, sensors and other elements may be connected to the communication network as nodes of the network, or they may be connected with a communication device which is connected to the network to operate as a node. Hence, the communication device can communicate with other parts of the network to receive from the network e.g. commands to be delivered to the actuators and/or to send to the network information obtained, for example, from the sensors. Certain functionality in the device acting as a node is required so that it can attach to the network, send messages to the network and receive messages from the network.

The sensors may include various types of pressure sensors, accelerometers, magnetometers, temperature sensors, etc. capable of providing real-time measurements about the drilling process in general, particularly about the conditions at the drill bit on one hand, and about the properties of geological formation on the other hand. These real-time measurements are referred to as measurement-while-drilling (MWD) or logging-while-drilling (LWD). On the basis of the measurements from the sensors, MWD may provide drilling mechanics information. The information provided by MWD about the conditions at the drill bit may include, for example, rotational speed of the drill, smoothness of the rotation, rotating pressure, pressure on the percussion piston, torque and weight on the drill bit, vibration type of the drill bit, temperature in the hole, energy of percussion and rotation per drilled volume/length, penetration per impact, penetration per bit revolution, rotation torque, feed force, rotation-feed pressure ratio, feed pressure-penetration rate ratio, etc. The parameters of interest typically vary depending on the used drilling method and the drilling apparatus.

Furthermore, measurements may be made for obtaining a detailed record (log) of the geologic formations penetrated by a drill hole. In such measurements, information about geological characteristics around the drill hole, such as density, porosity, cleavage, resistivity, fractioning, magnetic resonance and formation pressure, are obtained.

Instead of or in addition to measurement information obtained from the rock drilling apparatus, there may be a separate measurement system arranged to obtain one or more types of information regarding the drilling mechanics and/or the geologic formations, such as ore grade, mineral content, etc. Such separate measurement system may be functionally connected to the rock drilling apparatus, for example, for transferring the measurement information to the rock drilling apparatus.

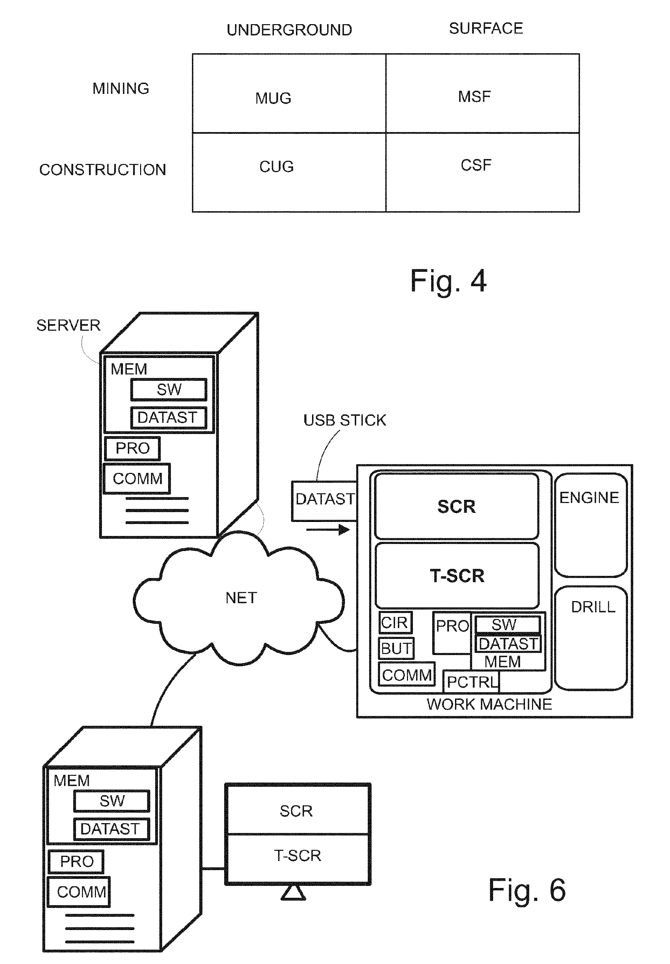

In general, the application areas of various drilling processes and apparatuses may be described by a 2x2 matrix depicted in Fig. 4. In one dimension, the application areas may be divided into underground (UG) and surface (SF) drilling applications. In another dimension, these may be further divided into mining (M) and construction (C) applications. The MWD/LWD systems may provide useful information for all these application areas.

For example, in planning and managing charging and blasting the information obtained from the MWD/LWD system may be useful in all of these application areas. Similarly, in managing excavation operations, in planning future excavation operation on the basis of previous operations, in managing and controlling the performance of drilling and in reporting the completed operation, the information obtained from the MWD/LWD system may be useful in all of these application areas. In monitoring and controlling rock quality and ore, the MWD/LWD information may be useful in both underground mining (MUG) and surface mining (MSF) applications. In planning tunnel reinforcing, the MWD/LWD information may be useful in both underground mining (MUG) and underground construction (CUG) applications. Accordingly, there is a need for reliable MWD information in all application areas of various drilling processes and apparatuses.

What is common to all contemporary MWD/LWD systems used in various drilling processes is that an MWD analysis based on the various measurements is carried out in a separate MWD unit. The MWD unit may be a remote computer, e.g. a PC, locating in the mining area or even further away, and the measurement information obtained from the drilling apparatus and/or any separate measurement system are transmitted to the MWD unit for the analysis. The MWD unit may also be implemented as an auxiliary unit of a drilling apparatus, wherein an auxiliary interface is required for transferring the measurement information obtained from the sensors of the drilling apparatus to the MWD unit. Transmitting the measurement information obtained from the sensors to a separate MWD unit always introduces delays in processing the data. Moreover, the data speed and the sampling rate used on the control bus delivering the sensor data is typically much higher than the data speed on any communication interface used for transmitting the measurement information to the MWD unit, thus inevitably causing distortion in the sensor signal data since either the data speed or the amount of samples must be reduced for an MWD analysis. Consequently, it is practically impossible to carry out an MWD analysis with an external unit in real-time with drilling process and to obtain accurate results due to at least somewhat distorted input data. Moreover, changes in drilling parameters and rock types, variations in hole size, drilling power and type and mass of a drilling apparatus, various penetration levels, etc. are all parameters that affect to the results of the analysis. Updating these data from the drilling apparatus in real-time to a separate MWD unit causes a further challenge to obtain a reliable MWD analysis data.

In order to avoid or at least alleviate the above problems, there is now introduced an improved control system for a drilling apparatus, the control system comprising: a control unit for controlling machine control level operations of the drilling apparatus; one or more machine control nodes connected to the control unit via a control bus, said machine control nodes providing at least outputs from one or more sensors of the drilling apparatus; and an analysis functionality arranged to operate at said machine control level, said analysis functionality being arranged to obtain measurement data of said one or more sensors from said one or more machine control nodes via the control bus and to carry out an analysis of a drilling process.

Thus, by integrating the analysis functionality, such as a measurement-while-drilling (MWD) functionality, at the machine control level of the control system of the drilling apparatus, an MWD analysis based at least partly on the measurements of sensors of the drilling apparatus may be carried out in real-time. Since the MWD functionality is connected to the same control bus as the sensors, the MWD functionality sees the sensors and other nodes directly via the control bus, and similarly, the nodes see the MWD functionality directly via the control bus. Therefore, the MWD analysis is based on as reliable sensor signals as possible because there is no need for data reduction and the analysis can be conducted with all available data.

Herein, the term analysis refers to any statistical, iterative, heuristic, or other mathematical method consisting of several steps and being based on the use of mathematical models to produce the results.

The results of analysis may be related, for example, to drilling conditions, geological conditions, or other conditions of interest for operating a drill rig, or for planning and/or reporting purposes. Results may include, for example, values for rock hardness, rock strength, rock drillability, rock type, fracturing, ore grade, abrasivity, rock mass quality, water content, rock quality class, rock type, drilling stability, drilling event, drilling resistance, fracture density or any other characteristic related to drilling.

The analysis may include combining measurement data or other information from two or more data sources, such as sensors or measurement channels, to produce results that are not available from individual measurement channels or their trivial modifications such as offsetting, scaling and plain linear transformations. Results may be provided, for example, in a form of new data, virtual sensor or measurement channel, aggregate parameters describing a set of measurements, or visualizations.

A measurement channel may also refer to a virtual measurement created by modifying an existing data channel.

Herein, the term "machine control" refers to operations of the control system, which relate to managing the movements of the drilling apparatus or any of its sub-units, such as a boom, drill, percussion piston, etc. Machine control involves any of initiation, management and stopping of a motion of the drilling apparatus or any of its sub-units. Machine control further involves any measurements relating to managing the movements. The term "machine control node" refers to a node of the control system either providing information about the state of the drilling apparatus or any of its sub-units or enabling to provide control information for managing the movements of the drilling apparatus or any of its sub-units. Machine control nodes involve, for example, various sensors, actuators, control units, valves, etc.

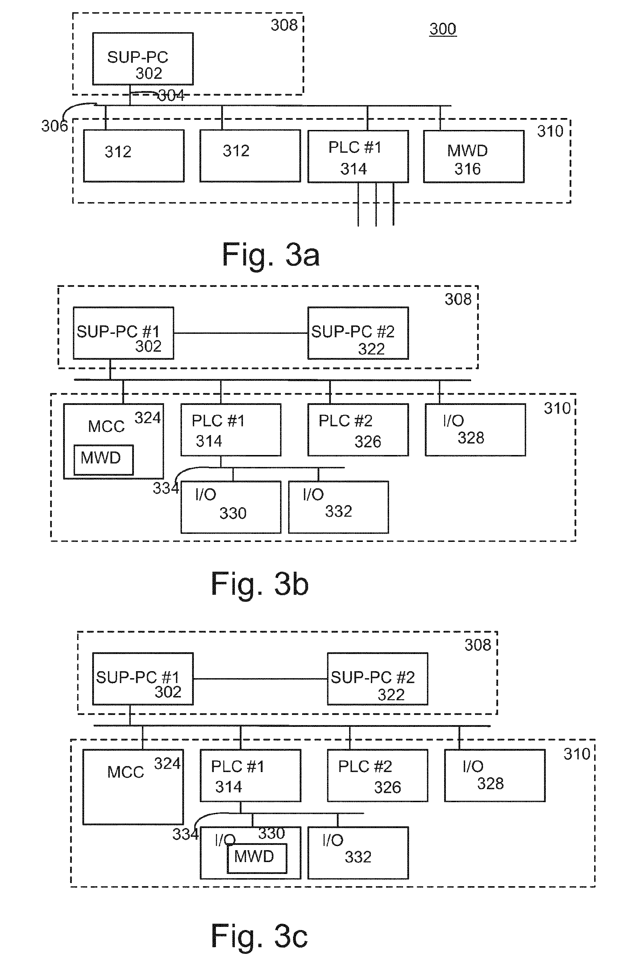

Figure 3a depicts a simplified example layout of a control platform 300 for a mining apparatus, such as the rock drilling apparatus of Figure 1. The control platform includes a control unit 302, which may be referred to as a supervisor device (SUP-PC#1), such as a computer, which is in a communication connection 304 with a control bus 306. The supervisor device 302 forms a kind of a supervisor level 308 (i.e. a higher control level) of the control platform 300. The control platform 300 also comprises a machine control level 310 (i.e. a lower control level) in which elements connected with different kinds of actuators, sensors etc. are located. The machine control level 310 may comprise one or more nodes 312 for different purposes in communication connection with the control bus 306. The nodes 312 may comprise, for example, sensors having a bus interface to the control bus. The nodes 312 may also comprise I/O devices having a bus interface to the control bus, wherein the sensors may be connected to the I/O device via an analogue connection. The nodes may include a programmable logic controller (PLC) 314 having inputs and outputs for connections to and from the actuators, sensors and other elements of the hardware of the mining apparatus. The machine control level further comprises an MWD functionality 316, connected to the control bus 306, which MWD functionality is arranged to obtain measurement data of one or more sensors e.g. from the programmable logic controller (PLC) 314 via the control bus. The MWD functionality may then e.g. continuously carry out an MWD analysis on the basis of the measurement data, and provide the MWD analysis signals to the control unit 302 via the control bus 306.

According to an embodiment, the MWD functionality is a hardware module operating as a machine control node connected to the control unit via the control bus. As shown in Figure 3a, the MWD functionality 316 is depicted as any other machine control node connected to the control bus. Hence, the control unit 302 sees the MWD functionality as an ordinary machine control node, and the MWD analysis signals provided by the MWD functionality are treated similarly to sensor signals on the control bus.

According to an embodiment, the MWD functionality is a software module integrated into a machine control node or the control unit. Thus, one of the machine control nodes may comprise necessary means for executing a software module; e.g. one of the machine control nodes may be implemented as a machine control computer (MCC), which may be sub-ordinated to the supervisor level control unit 302 but may nevertheless be responsible for controlling the machine control level operations. The software module may also be integrated into the supervisor level control unit 302.

The machine control node implementing the MWD functionality may comprise a memory for storing the results of the MWD analysis. The memory may also reside in another node connected to the control bus, and the MWD functionality may then transmit the results of the MWD analysis to said node. The results of the MWD analysis are thus available in real-time with the drilling process, but also after the drilling process by retrieving the results from the memory. In addition to the results of the MWD analysis, the memory may be arranged to store further data, such as MWD analysis data from an external MWD unit or control data from an office computer (e.g. so-called IREDES data (International Rock Excavation Data Exchange Standard)). Thus, the data to be stored may be, for example, an IREDES hole report, any other information relating to the location of holes or any other data describing the operations of the drilling apparatus, such as IREDES quality reports including e.g. the realization of the drilling process and/or storing of the data acquisition parameters . The data may further be any separate report into which the analysis data can be included.

Figure 3b depicts a simplified example layout of another control platform 300 for the mining apparatus. In this example embodiment the supervisor level 308 comprises a first supervisor device SUP-PC#1, 314 and a second supervisor device SUP-PC #2, 322. The machine control level 310 comprises a machine control computer MCC 324, wherein the MWD functionality is integrated as a software module. The machine control level further comprises several PLC devices PLC#1, 314, PLC#2, 326 some I/O devices 328, 330, 332 etc. There is also a second control bus 334 to which the first PLC device PLC#1, 314 is connected. The control bus 334 is intended to enable communication between I/O devices connected to the second control bus 334 and the first PLC. Hence, the first PLC has access to the I/O devices and acts as a gateway between the first control bus 306 and the second control bus 334. Also herein, the MWD functionality operates as an ordinary machine control node, and the MWD analysis signals provided by the MWD functionality are treated similarly to sensor signals on the control bus.

Figure 3c depicts a simplified example layout of yet another control platform 300 for the mining apparatus. This example embodiment differs from the control platform of Figure 3b in that the MWD functionality is connected to the second control bus 334, as integrated in the I/O device 330 as a software module. Herein, the second control bus may be, for example, a sub-control bus for controlling one or more booms of the drilling apparatus. It is possible to use higher sampling frequency in a bus connected to drilling process, and by providing the MWD functionality close to the boom, it is possible to obtain even more accurate data about the drilling process. Moreover, the data rate reduction of the analysis, if necessary, results in facilitating communication to a higher-level bus or with an external interface.

It should be noted here that the example platforms presented in Figures 3a, 3b and 3c are only simplified examples and in practical implementations the platforms may comprise many devices acting as nodes in the control bus, and there may also be a large number of I/O devices, actuators, sensors and other elements to enable the operation of the mining apparatus. Furthermore, one mining apparatus may comprise several different control platforms which may or may not communicate with each other. For example, there may be a first platform for controlling the operation of the engine, transmission, brakes and lights of the mining apparatus and a second platform for controlling the operation of the tools, boom(s) etc. of the mining apparatus. There may be a gateway between the first control platform and the second control platform.

It is further noted that the embodiments described herein are equally applicable to auxiliary equipment attachable to a mining apparatus, wherein the auxiliary equipment comprises the control system as described herein. Thus, the mining apparatus, as such, may be e.g. hydraulically controlled and have no control bus as described above, but there may be auxiliary equipment, such as a hole navigation system, connected to the mining apparatus. For example, in quarrying, road construction and open pit mining applications a satellite navigation based hole navigation system may be used to improve hole quality and hole position accuracy. A hole navigation system may be implemented as a control system as described in the embodiments, and the MWD functionality may be connected to the hole navigation system as a hardware or a software module.

According to an embodiment, the MWD functionality is arranged to be controlled by information contained in messages of a protocol used in said control bus. Since the MWD functionality is implemented on the machine control level as or within one of the machine control nodes, the MWD functionality is enabled to be controlled similarly to other machine control nodes. Thereby, the operation of the MWD functionality can be controlled and monitored directly from the user interface of the drilling apparatus. The protocol used in the control bus can be any known protocol, such as CANopen, J1939, Ethernet or Profinet. It is also possible to use commands of a higher level protocol, and the information contained in those commands may be conveyed using the protocol used in the control bus.

According to an embodiment, the MWD functionality is arranged to be switched on in response to switching on the control system. Hence, the MWD functionality is arranged to follow the same power-on command as the control system to which the MWD functionality is connected, and to switch on at the same time as the control system.

It is to be noted that the MWD functionality may be connected to a control bus having only drilling-related operations, such as the second control platform described above, whereby the MWD functionality is may be switched on only when the drilling-related operations, e.g. boom control, drill control, etc., are initiated. Nevertheless, the MWD functionality is usable when the drilling-related operations start. Moreover, the control bus having the drilling-related operations connected thereto is typically the fastest control bus of the drilling apparatus in terms of the used sampling frequency. Figure 3c shows an example of connecting the MWD functionality to the control bus having the drilling-related operations connected thereto. It is thereby further confirmed that the time resolution of the MWD analysis is as high as possible and the sensor signals obtained from the machine control nodes are as reliable as possible.

The other control commands for the MWD functionality, such as commands relating to boot, setup, starting/stopping the MWD analysis and/or storing the analysis results in a memory, etc., may be given as on-demand basis from the user interface of the drilling apparatus. It is also possible that the control system as such provides the above commands without any user interaction. The control system is also used for managing e.g. access rights of the MWD functionality and internal settings, such as the time resolution, of the MWD functionality. The software of the MWD functionality may also be updated in connection with or as a part of updating the control system.

The MWD functionality arranged to operate at the machine control level as described in the embodiments herein may provide several technical advantages over the known MWD solutions. An advantage over the known auxiliary MWD solutions is that no additional sensors are needed in the mining apparatus, but rather the MWD functionality may directly utilise the existing sensors of the mining apparatus.

According to an embodiment, the MWD functionality is arranged to carry out an MWD analysis of a drilling process, where control data of the drilling process is used as an input for the MWD analysis. The control system arrangements described above, where the MWD functionality is implemented on the machine control level and connected to the control bus of the machine control level, provide an excellent platform for an MWD analysis where not only the sensor signals but also the control data and/or and internal state of the drilling process is used as input for the MWD analysis. Since also the control signals provided to the machine control nodes are equally available to the MWD functionality, the effect of at least one control signal value to the drilling process may be monitored and/or the effect of a change in the drilling conditions to at least one control signal value can be monitored. The MWD functionality may be arranged to take these effects into account when carrying out the MWD analysis.

According to an embodiment, the control system is arranged to monitor operation of at least one machine control node used to control the drilling process; and data obtained from monitoring the operation of the at least one machine control node is used to supplement the MWD analysis.

Herein, the changes in the control signal values or in the operating states of the drilling apparatus may be especially used for detecting changes in geological characteristics of the rock material around the drill hole, such as changes in density, porosity, resistivity, fractioning, magnetic resonance and formation pressure.

Thus, the control system is arranged to monitor the operation of at least one, but preferably a plurality of machine control nodes, which are used to control the drilling process. The data to be monitored may relate to, for example, a status of a node, a status of a software performed by a node, messages sent by a node to the control bus and/or information content of said messages. The control system may monitor control signal values and/or parameter values used to adjust the operation of one or more actuators and/or tools of the drilling apparatus. The drilling apparatus typically comprises a plurality of operating states, and the drilling apparatus may also automatically change its operating state in response to changes in the drilling process, e.g. changes in the rock material. The control system may also monitor the changes in the operating state. The changes in the control signal values and/or the parameter values and/or in the operating state may then be used to supplement the MWD analysis.

Thanks to the MWD analysis functionality integrated at the machine control level of the control system, the MWD analysis data is available in machine control level practically in real-time, but a very short response time and accuracy from the MWD analysis can also be guaranteed outside the machine control level. For example, when a drilling process has reached a predetermined stage (i.e. when enough sensor data has been gathered for a reliable MWD analysis), it can be guaranteed that MWD analysis data can be provided outside the machine control level with a delay of less than one second. Thus, the MWD analysis data can be used almost in real-time for controlling the drilling process outside the machine control level, for example at a remote control station.

It is known in control theory that in a dynamic control system, when one control parameter is kept constant, the effects of external disturbances to the control system may be analysed on the basis of control measures taken in order to restore the control system to a stabile state. Also by monitoring the controllers in a dynamic control system, it is possible to obtain information of the external influence affecting on the system.

According to an embodiment, changes in rock material being drilled are analysed during a constant state of a first drilling parameter on the basis of changes caused to at least a second drilling parameter.

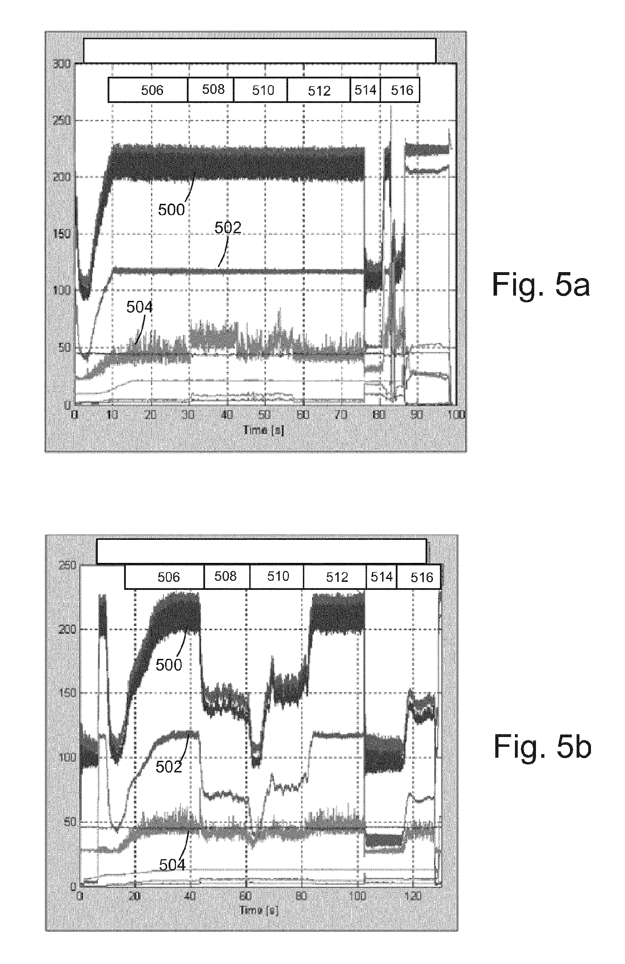

For example, constant speed drilling (i.e. constant penetration rate) may be used as the constant drilling parameter. Then, for example, percussion pressure, feed pressure and/or rotation pressure may be used as second drilling parameters, whose changes are monitored. This example is illustrated in Figures 5a and 5b, which show relative values of percussion pressure 500, feed pressure 502 and rotation pressure 504 as a function of time, when drilling through layers of different rock materials, such as hard rock (layers 506, 512), soft rock (508), loose rock (510), void (514),etc..

Figure 5a shows a situation where the drilling speed (penetration rate) is not considered at all, i.e. it may vary according to the drilling conditions, and the percussion pressure, the feed pressure and the rotation pressure are kept constant. As can be seen in Figure 5a, only very minor conclusions, if any, can be made about the changes in the characteristics of the rock material.

According to an embodiment, the control system is arranged to adjust at least the first drilling parameter to be kept constant on the basis of changes in at least the second parameter. In Figure 5b, the drilling speed (penetration rate) is adjusted to be kept constant. In order to keep the drilling speed constant throughout the different rock materials, the control system dynamically changes the values of the percussion pressure, the feed pressure and the rotation pressure when the characteristics of the rock material change in course of the drilling process.

According to an embodiment, the analysis functionality is arranged to identify the constant state of at least the first parameter and perform the analysis on the basis of changes in at least the second parameter. As can be seen in Figure 5b, the changes in the values of the percussion pressure, the feed pressure and the rotation pressure reflect very well the changes in the rock material. In other words, rather reliable conclusions can be made about the changes in the characteristics of the rock material on the basis of the values of the percussion pressure, the feed pressure and/or the rotation pressure, if the drilling speed is adjusted to be kept constant. These conclusions can then be used to supplement the MWD analysis.

According to an embodiment, diagnostics provided by the MWD analysis is arranged to be displayed on the user interface of the drilling apparatus. The control unit, such as the supervisory device 302, may be provided with a user interface operating as the user interface of the drilling apparatus. The diagnostics provided by the MWD analysis may be displayed on a display of the user interface in real-time with the drilling process, or the results may be retrieved from the memory after the drilling process. Thus, the results of the MWD analysis are immediately available for the operator of the drilling apparatus for planning the next drilling tasks, or for the charger for planning the charging of the blastholes.

The diagnostics provided by the MWD analysis may also be forwarded to an external computer either in real-time with the drilling process or by retrieving the results from the memory after the drilling process. The external computer may be a remote computer, e.g. a PC, locating at a remote control station in the mining area or even further away and being arranged to e.g. design drilling patterns or carry out further MWD analysis.

The diagnostics provided by the MWD analysis may also be forwarded to another drilling apparatus in the same mining area. There may be a plurality of mining apparatuses, also referred to as a fleet, operated simultaneously in the same surface or underground operating area. The fleet may be monitored and controlled from the remote control station locating outside the operating area. A wireless data connection is established between the remote control station and the mining apparatuses belonging to the fleet. The diagnostics provided by the MWD analysis may be sent along with various sensor data and video describing the operations of the mining apparatus sent by the mining apparatuses to the control station via the wireless connection. It is also possible that the mining apparatuses provide the MWD analysis diagnostics directly to each other, i.e. without any remote control station interaction.

A skilled person appreciates that any of the embodiments described above may be implemented as a combination with one or more of the other embodiments, unless there is explicitly or implicitly stated that certain embodiments are only alternatives to each other.

The various embodiments of the invention can be implemented with the help of computer program code that resides in a memory and causes the relevant apparatuses to carry out the invention. For example, a work machine may comprise circuitry and electronics for handling, receiving and transmitting data, computer program code in a memory, and a processor that, when running the computer program code, causes the machine to carry out the features of an embodiment.

Fig. 6 shows a block diagram of a system for carrying out a control process of the drilling apparatus. The system comprises one or more processors PRO, and memory MEM. The processors and memory may be in one part of the system or distributed across different parts and different apparatuses. For example, a drilling apparatus control interface may have its own processor and/or memory, a computer connected to the drilling apparatus its own processor and memory, and other parts of the system their own. The memory MEM may comprise software SW executable on the processor PRO so that the system may display items to the operator via a screen SCR and accept input through buttons BUT, physical controls PCTRL like levers and joysticks, and/or through a touch screen T-SCR. A part or all of the steps of an embodiment may be carried out in software, and a part or all of the steps may be carried out by control circuitry CIR. The software may reside on a computer-readable non-transitory medium such as a USB stick or a data disc, and the computer program code is stored on said medium. Such a computer program product may be used to deliver the functionalities of the invention to a system by installation or by using the computer-readable medium directly for executing the program therefrom. The system may comprise communication modules COMM for sending and receiving data between the different parts and apparatuses of the system.

It is obvious that the present invention is not limited solely to the above-presented embodiments, but it can be modified within the scope of the appended claims.

## Claims

1. A control system for a drilling apparatus, the control system comprising:
a control unit for controlling machine control level operations of the drilling apparatus;
one or more machine control nodes connected to the control unit via a control bus, said machine control nodes providing at least one output from one or more sensors of the drilling apparatus; and
an analysis functionality arranged to operate at said machine control level, said analysis functionality being arranged to obtain measurement data of said one or more sensors from said one or more machine control nodes via the control bus and to carry out an analysis of a drilling process.

2. The control system according to claim 1, wherein
the analysis functionality is a hardware module operating as a machine control node connected to the control unit via the control bus.

3. The control system according to claim 1, wherein
the analysis functionality is a software module integrated into a machine control node or the control unit.

4. The control system according to any preceding claim, wherein
the analysis functionality is arranged to be controlled by commands or information contained in messages of a protocol used in said control bus.

5. The control system according to any preceding claim, wherein the control system comprises an interface to a user interface of the drilling apparatus; and
the user interface comprises means for monitoring and/or controlling the operation of the analysis functionality.

6. The control system according to any preceding claim, wherein
the analysis functionality is arranged to carry out the analysis without storing the measurement data of said one or more sensors in a memory.

7. The control system according to any preceding claim, wherein
the analysis functionality is arranged to carry out a measurement-while-drilling (MWD) analysis of the drilling process, where control data of the drilling process is used as an input for the MWD analysis.

8. The control system according to claim 7, wherein
the control system is arranged to monitor operation of at least one machine control node used to control the drilling process; and
data obtained from monitoring the operation of the at least one machine control node is used to supplement the MWD analysis.

9. The control system according to claim 8, wherein
changes in rock material being drilled are arranged to be analysed during a constant state of a first drilling parameter on the basis of changes caused to at least a second drilling parameter.

10. The control system according to claim 8 or 9, wherein
the control system is arranged to adjust at least the first drilling parameter to be kept constant on the basis of changes in at least the second parameter.

11. The control system according to claim 9 or 10, wherein
the analysis functionality is arranged to identify the constant state of at least the first parameter and perform the analysis on the basis of changes in at least the second parameter.

12. The control system according to any of claims 7 - 11, wherein
diagnostics provided by the MWD analysis is arranged to be displayed on the user interface of the drilling apparatus.

13. The control system according to any of claims 7 - 12, wherein
diagnostics provided by the MWD analysis is arranged to be provided to a remote computer.

14. A drilling apparatus arranged to carry out a drilling process, the drilling apparatus comprising a control system according to any of claims 1 - 13.

15. An auxiliary equipment for a drilling apparatus arranged to carry out a drilling process, the auxiliary equipment comprising a control system according to any of claims 1 - 13.

16. A method of analysing drilling process of a drilling apparatus, the method comprising:
obtaining measurement data of one or more sensors of the drilling apparatus from one or more machine control nodes via a control bus; and
carrying out an analysis of a drilling process, at a machine control level, based on said obtained measurement data.

17. A computer program product, stored on a non-transitory memory medium, comprising computer program code which, when executed by a processor, causes an apparatus to perform the steps of method claim 16.
